(19) Europäisches Patentamt
European Patent Office
Office européen des brevets

(11) Veröffentlichungsnummer: **0 033 719**
**B1**

(12) # EUROPÄISCHE PATENTSCHRIFT

(45) Veröffentlichungstag der Patentschrift: **27.12.84**

(21) Anmeldenummer: **81810024.0**

(22) Anmeldetag: **30.01.81**

(51) Int. Cl.³: **C 09 B 67/24,** C 09 B 3/08, D 06 P 1/39, D 21 H 1/46, D 21 H 3/80

(54) **Flüssigformulierung eines anionischen Farbstoffes der Disazoreihe, Verfahren zur Herstellung und Verwendung.**

(30) Priorität: **05.02.80 CH 915/80**

(43) Veröffentlichungstag der Anmeldung: **12.08.81 Patentblatt 81/32**

(45) Bekanntmachung des Hinweises auf die Patenterteilung: **27.12.84 Patentblatt 84/52**

(84) Benannte Vertragsstaaten: **CH DE FR GB LI SE**

(56) Entgegenhaltungen:
**BE - A - 631 379**
**FR - A - 402 120**
**FR - A - 2 193 065**

(73) Patentinhaber: **CIBA-GEIGY AG, Postfach, CH-4002 Basel (CH)**

(72) Erfinder: **Lacroix, Roger, Dr., Rue Vauban 24, F-68300 Village-Neuf (FR)**

**EP 0 033 719 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine neue Flüssigformulierung eines anionischen Farbstoffes der Disazoreihe, Verfahren zu deren Herstellung und deren Verwendung zum Färben von Cellulosematerialien und insbesondere Papier.

Flüssigformulierungen von anionischen Farbstoffen sind z.B. aus der deutschen Offenlegungsschrift 2 335 512 bekannt. Diese Offenlegungsschrift beansprucht Farbstofflösungen, welche sulfonsäuregruppenhaltige Azo-, Nitro- oder Anthrachinonfarbstoffe in einem mit Wasser in jedem Verhältnis mischbaren Lösungsmittelgemisch, bestehend aus einem aprotischen Lösungsmittel oder einem Gemisch derselben, einem Glykol oder Glykoläther und gegebenenfalls Wasser, gelöst enthalten.

Desweiteren beschreibt die BE-A-631 379 konzentrierte stabile Lösungen anionischer Farbstoffe, welche den Farbstoff als Salz eines wasserlöslichen aliphatischen Diamins oder eines wasserlöslichen Alkanolamins und als Lösungsmittel bei Raumtemperatur flüssige, mehrwertige, wasserlösliche Alkohole und/oder deren Äther enthält. Tetramethylharnstoff als Lösungsmittel wird nicht empfohlen. Setzt man jedoch den Farbstoff der Formel

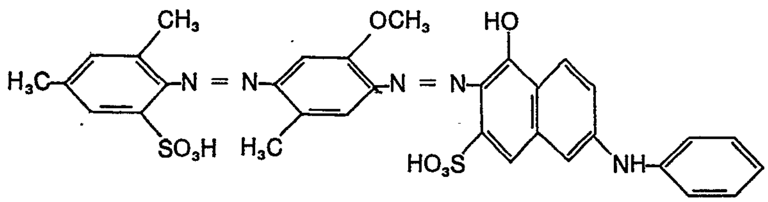

in Form eines Alkalisalzes wie er bei der Herstellung nach üblichen Verfahren anfällt in dem Lösungsmittelgemisch gemäss der genannten Offenlegungsschrift 2 335 512 bzw. das Alkanolaminsalz dieses Farbstoffes in dem Lösungsmittelgemisch ohne Tetramethylharnstoff gemäss der BE-A-631 379 ein, so erhält man in beiden Fällen keine lagerstabile Lösung.

Es wurde nun gefunden, dass man überraschenderweise eine echte lagerstabile Lösung erhält, wenn man den genannten Farbstoff in Form eines Aminsalzes in einem bestimmten Lösungsmittelgemisch verwendet.

Die erfindungsgemässe Formulierung ist dadurch gekennzeichnet, dass sie den Disazofarbstoff, der in Form der freien Säure der Formel

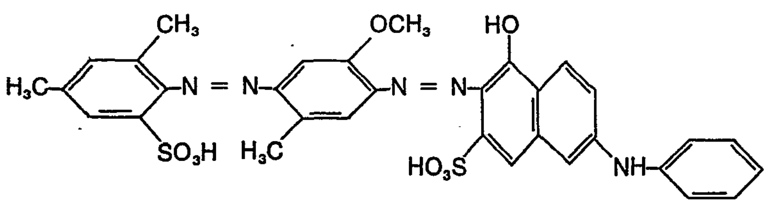

entspricht, gelöst in einem mit Wasser in jedem Verhältnis mischbaren Lösungsmittelgemisch, bestehend aus N,N,N',N'-Tetramethylharnstoff, mindestens einem Alkylenglykoläther und Wasser, und so viel Alkyl- bzw. Alkanolamin, um einen pH-Wert von 6,5 bis 8,5 der Flüssigformulierung einzustellen, enthält, wobei der Farbstoff als Alkyl- oder Alkanolaminsalz vorliegt.

Bevorzugt enthält die erfindungsgemässe Flüssigformulierung den Farbstoff in Mengen von 10 bis 30, insbesondere 15 bis 20 Gewichtsprozent, wobei der Farbstoff als freie Säure berechnet wird. Das verwendbare Lösungsmittelgemisch setzt sich vorteilhafterweise aus 3 bis 20, insbesondere 5 bis 8 Gewichtsprozent Tetramethylharnstoff, 25 bis 45, insbesondere 30 bis 40 Gewichtsprozent eines Alkylenglykoläthers und 20 bis 40, vorzugsweise 20 bis 35 Gewichtsprozent Wasser, bezogen auf die Gesamtformulierung, zusammen. Diese Formulierung enthält ausserdem ein Alkyl- bzw. Alkanolamin in solcher Menge, dass der pH-Wert der Formulierung ca. 7 bis 8 beträgt, wobei der Farbstoff als Alkyl- oder Alkanolaminsalz vorliegt. Sie kann gegebenenfalls noch weitere Zusätze in geringen Mengen enthalten.

Erfindungsgemäss verwendbare Alkylenglykoläther sind beispielsweise Äthylenglykolmonomethyl- und -monoäthyläther, Diäthylenglykolmonomethyläther, Diäthylenglykolmonobutyläther, Triäthylenglykolmonobutyläther und vorzugsweise Diäthylenglykolmonoäthyläther oder Gemische dieser Glykoläther.

Zur Einstellung des pH-Wertes geeignete Alkylamine sind z.B. Alkylamine mit 1 bis 6 Kohlenstoffatomen wie Methylamin und Äthylamin; geeignete Alkanolamine sind z.B. Äthanolamin, n-Propanolamin, i-Propanolamin, Diäthanolamin, Triäthanolamin und Triisopropanolamin. Vorzugsweise enthält die erfindungsgemässe Flüssigformulierung ca. 3 bis 10 Gewichtsprozent, insbesondere 3 bis 6 Gewichtsprozent des Alkyl- bzw. Alkanolamins, insbesondere Triisopropanolamin.

Diese Flüssigformulierung kann ferner weitere Zusätze, wie Elektrolyt (z.B. NaCl, $Na_2SO_4$), Harnstoff, Pentaerythrit, Dispergatoren, Bacteriostatica, Schaumverhütungsmittel etc. enthalten. Sie kann bis ca. 3 Gewichtsprozent, vorzugsweise jedoch höchstens 1,5 Gewichtsprozent dieser weiteren Zusätze enthalten.

Diese neue Flüssigformulierung stellt eine echte Lösung dar. Sie ist konzentriert an Farbstoff,

besitzt eine Viskosität von etwa 25 cPs/20 °C (0.025 Pa · s), ist lagerstabil über mehrere Monate bei Temperaturen zwischen ca. −10°C und +60 °C und in jedem Verhältnis mischbar mit kaltem und warmem Wasser.

Die Herstellung der erfindungsgemässen Flüssigformulierung kann direkt aus dem Farbstoffpresskuchen erfolgen, der den Farbstoff in Form der freien Säure enthält, und erfolgt z.B. derart, dass man den definitionsgemässen Disazofarbstoff als freie Säure entweder als pure Ware oder vorzugsweise als wässrigen Presskuchen bei Raumtemperatur einem definitionsgemässen Lösungsmittelgemisch aus mindestens einem Alkylenglykoläther und Tetramethylharnstoff, gegebenenfalls im Gemisch mit Wasser, und gleich anschliessend das Alkyl- bzw. Alkanolamin in solcher Menge zugibt, dass der pH-Wert der resultierenden Lösung ca. 6,5 bis 8,5, vorzugsweise 7 bis 8 ist. Für den Fall, dass ein wässriger Presskuchen zum Einsatz kommt, ist es nicht notwendig, separat Wasser zuzusetzen.

Verwendung findet die erfindungsgemässe Flüssigformulierung, gegebenenfalls nach dem Verdünnen mit Wasser, insbesondere zum Färben und Bedrucken von Papier, einschliesslich Halbkartons und Kartons, wobei man diese Materialien z.B. in der Masse, durch Streichen oder durch Tauchen färben kann. Im übrigen kann eine derartige Flüssigformulierung auch für ein kontinuierliches oder diskontinuierliches Färbeverfahren für Textilmaterialien, insbesondere Cellulose und Polyamid, eingesetzt werden.

Die folgenden Beispiele veranschaulichen die Erfindung. «SR» bedeutet «Schopper Riegler» und «atro» bedeutet «absolut trocken»; %-Angaben bedeuten, sofern nichts anderes angegeben ist, Gewichtsprozente.

Beispiel 1:

540 g des wässrigen Presskuchens, enthaltend ca. 10 g NaCl, 340 g Wasser und 190 g des Farbstoffes der Formel

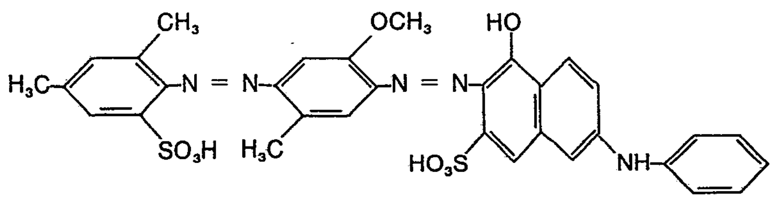

in Form der freien Säure werden unter starkem Rühren bei Raumtemperatur mit 50 g Tetramethylharnstoff und 370 g Diäthylenglykolmonoäthyläther gemischt. Gleich anschliessend wird das pH des Gemisches mit ca. 40 g Triisopropanolamin auf 7 bis 8 eingestellt, wobei eine Lösung resultiert, die man noch ca. 5 Stunden bei Raumtemperatur weiterrührt. Man erhält eine echte Farbstofflösung mit einer Viskosität von ca. 25 cPs bei 20 °C (0.025 Pa · s), bestehend aus 23% des obengenannten Farbstoffes als Triisopropanolaminsalz (bestehend aus 19% freier Farbstoffsäure und 4% Triisopropanolamin), 34% Wasser, 1% NaCl, 37% Diäthylenglykolmonoäthyläther und 5% Tetramethylharnstoff. Diese Farbstofflösung ist während mehreren Monaten bei Temperaturen von −10 °C bis +60 °C stabil, und mit Wasser in jedem Verhältnis mischbar. Sie eignet sich nach dem Verdünnen mit Wasser zum Färben von Papier.

Verfährt man gemäss der Arbeitsweise des vorstehenden Beispiels 1, verwendet jedoch die in den folgenden Beispielen 2 bis 5 genannten Komponenten, so erhält man Farbstofflösungen der in diesen Beispielen genannten Zusammensetzung, die ähnliche Eigenschaften aufweisen.

Beispiel 2:

Mengen der eingesetzten Komponenten:

540 g des in Beispiel 1 angegebenen wässrigen Presskuchens,
50 g Tetramethylharnstoff,
390 g Diäthylenglykolmonoäthyläther,
ca. 20 g Äthylamin.

Zusammensetzung der konzentrierten Farbstofflösung:

19 Gewichtsprozent Farbstoff (berechnet auf freie Säure),
ca. 2 Gewichtsprozent Äthylamin
1 Gewichtsprozent NaCl,
34 Gewichtsprozent Wasser,
5 Gewichtsprozent Tetramethylharnstoff,
39 Gewichtsprozent Diäthylenglykolmonoäthyläther.

Beispiel 3:

Mengen der eingesetzten Komponenten:

540 g des in Beispiel 1 angegebenen wässrigen Presskuchens,
50 g Tetramethylharnstoff,
385 g Diäthylenglykolmonbutyläther,
25 g Äthanolamin.

Zusammensetzung der konzentrierten Farbstofflösung:

19 Gewichtsprozent Farbstoff (berechnet auf freie Säure),
2,5 Gewichtsprozent Äthanolamin,
1 Gewichtsprozent NaCl,
34 Gewichtsprozent Wasser,
5 Gewichtsprozent Tetramethylharnstoff,
38,5 Gewichtsprozent Diäthylenglykolmonobutyläther.

Beispiel 4:

Mengen der eingesetzten Komponenten:

540 g des in Beispiel 1 angegebenen wässrigen Presskuchens,

50 g Tetramethylharnstoff,
385 g Diäthylenglykolmonomethyläther,
25 g Äthanolamin.

Zusammensetzung der konzentrierten Farbstofflösung:

19 Gewichtsprozent Farbstoff (berechnet auf freie Säure),
2,5 Gewichtsprozent Äthanolamin,
1 Gewichtsprozent NaCl,
34 Gewichtsprozent Wasser,
5 Gewichtsprozent Tetramethylharnstoff,
38,5 Gewichtsprozent Diäthylenglykolmonomethyläther.

Beispiel 5:

Mengen der eingesetzten Komponenten:

540 g des in Beispiel 1 angegebenen wässrigen Presskuchens,
50 g Tetramethylharnstoff,
375 g Diäthylenglykolmonoäthyläther,
35 g Isopropanolamin.

Zusammensetzung der konzentrierten Farbstofflösung:

19 Gewichtsprozent Farbstoff (berechnet auf freie Säure),
3,5 Gewichtsprozent Isopropanolamin,
1 Gewichtsprozent NaCl,
34 Gewichtsprozent Wasser,
5 Gewichtsprozent Tetramethylharnstoff,
37,5 Gewichtsprozent Diäthylenglykolmonoäthyläther.

Beispiel 6:

Druckpapier

800 kg Sulfatcellulose gebleicht und 200 kg Sulfitcellulose gebleicht, werden in der angelieferten Form in einen Pulper, in dem 14 cbm Fabrikationswasser vorgelegt sind, eingetragen und bis zur Stippenfreiheit aufgeschlagen. Der Aufschlagvorgang benötigt 30 Minuten. Anschliessend wird der aufgeschlagene Zellstoff in eine Ableerbütte überführt. Aus der Ableerbütte wird die Zellstoffsuspension mit Stoffmühlen auf einen Mahlgrad von 25° SR gemahlen und gelangt anschliessend in eine Mischbütte. In der Mischbütte erfolgen als weitere Zusätze 250 kg Kaolin Ia (als Füllstoff) sowie 0,1 bis 0,05% der Farbstoff-Formulierung gemäss Beispiel 1, berechnet auf atro Faser. Nach 15 Minuten Aufziehzeit werden 2% Harzleim, berechnet auf atro Cellulose, sowie nach 10 Minuten 4% Alaun, berechnet auf atro Cellulose, zugefügt. Dieser Papierstoff gelangt über den üblichen Prozessablauf auf die Papiermaschine. Man erhält ein violett gefärbtes Druckpapier.

Beispiel 7:

Tissuepapier

1000 kg Sulfatcellulose gebleicht, werden in der angelieferten Form in einen Pulper, in dem 14 cbm Fabrikationswasser vorgelegt sind, eingetragen und bis zur Stippenfreiheit aufgeschlagen. Der Aufschlagvorgang benötigt 30 Minuten. Anschliessend wird der aufgeschlagene Stoff in eine Ableerbütte überführt. Aus der Ableerbütte wird der Zellstoff mit Stoffmühlen auf einen Mahlgrad von 25° SR gemahlen und gelangt anschliessend in eine Mischbütte. In der Mischbütte erfolgt die Zugabe von 0,1 bis 0,05% Farbstoff-Formulierung gemäss Beispiel 1, bezogen auf atro Faser. Nach 15 Minuten Aufziehzeit gelangt dieser Papierstoff über den üblichen Prozessablauf auf die Papiermaschine. Man erhält ein violett gefärbtes Tissuepapier.

Beispiel 8:

Leimpresse-Appliaktion

In 1000 l einer 10%igen wässrigen, anionischen Stärkelösung (lösliche Stärke, die oxydativ aufgeschlossen ist) werden 5 kg Farbstoff in Form einer lösungsmittelhaltigen Formulierung gemäss Beispiel 1 gelöst und via Leimpresse auf eine Papierbahn appliziert. Der Auftrag obiger Lösung beträgt 1,5 g/m² atro je Seite. Man erhält ein violett gefärbtes Papier.

**Patentansprüche**

1. Stabile, konzentrierte, mit Wasser in jedem Verhältnis mischbare Flüssigformulierung eines anionischen Farbstoffes der Disazoreihe, dadurch gekennzeichnet, dass sie den Disazofarbstoff der in Form der freien Säure der Formel

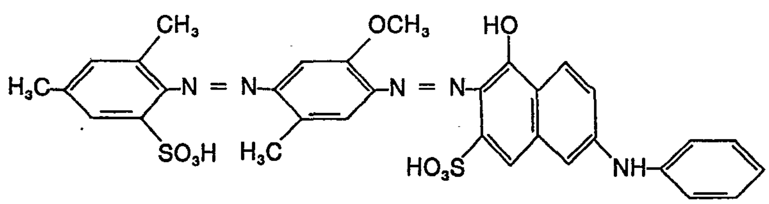

entspricht, gelöst in einem mit Wasser in jedem Verhältnis mischbaren Lösungsmittelgemisch, bestehend aus N,N,N',N'-Tetramethylharnstoff, mindestens einem Alkylenglykoläther und Wasser und soviel Alkyl- bzw. Alkanolamin, um einen pH-Wert von 6,5 bis 8,5 der Flüssigformulierung einzustellen, enthält, wobei der Farbstoff als Alkyl- oder Alkanolaminsalz vorliegt.

2. Flüssigformulierung gemäss Anspruch 1, dadurch gekennzeichnet, dass sie aus 10 bis 30, vorzugsweise 15 bis 20 Gewichtsprozent des Disazofarbstoffes, berechnet als freie Säure gelöst in 20 bis 40, vorzugsweise 20 bis 35 Gewichtsprozent Wasser, 3 bis 20, vorzugsweise 5 bis 8 Gewichtsprozent Tetramethylharnstoff, 25 bis 45, vorzugsweise 30 bis 40 Gewichtsprozent eines Alkylenglykoläthers und soviel Alkanolamin bzw. Alkylamin um die Lösung auf einen pH-Wert von 6,5 bis 8,5 einzustellen, sowie gegebenenfalls weiteren Zusätzen besteht.

3. Flüssigformulierung gemäss den Ansprüchen 1 und 2, dadurch gekennzeichnet, dass sie den Disazofarbstoff in Form des Triisopropanolaminsalzes enthält.

4. Flüssigformulierung gemäss den Ansprüchen 1 bis 3, dadurch gekennzeichnet, dass sie als Alkylenglykoläther Äthylenglykolmonomethyläther, Äthylenglykolmonoäthyläther, Diäthylenglykolmonomethyläther, Diäthylenglykolmono äthyläther, Diäthylenglykolmonobutyläther, Triäthylenglykolmonobutyläther oder Gemische dieser Glykoläther enthält.

5. Flüssigformulierung gemäss den Ansprüchen 1 bis 4, dadurch gekennzeichnet, dass sie Diäthylenglykolmonoäthyläther enthält.

6. Flüssigformulierung gemäss den Ansprüchen 1 bis 5, dadurch gekennzeichnet, dass sie als weitere Zusätze Elektrolyt, Bacteriostatika, und/ oder Schaumverhütungsmittel enthält.

7. Verfahren zur Herstellung der Flüssigformulierung gemäss den Ansprüchen 1 bis 6, dadurch gekennzeichnet, dass man den Disazofarbstoff als freie Säure in Form des wässrigen Presskuchens bei Raumtemperatur mit einem definitionsgemässen Lösungsmittelgemisch aus mindestens einem Alkylenglykoläther und Tetramethylharnstoff gegebenenfalls im Gemisch mit Wasser und gleich anschliessend das Alkyl- bzw. Alkanolamin in solcher Menge zugibt, dass der pH-Wert der resultierenden Lösung ca. 6,5 bis 8,5 ist.

8. Verwendung der Flüssigformulierung gemäss den Ansprüchen 1 bis 6, bzw. erhalten gemäss dem Verfahren des Anspruchs 7 zum Färben und Bedrucken von Cellulose und Polyamid, insbesondere von Papier.

## Claims

1. A stable and concentrated liquid preparation of an anionic dye of the disazo class, which preparation is miscible with water in any proportion and contains the disazo dye, which in the form of the free acid corresponds to the formula

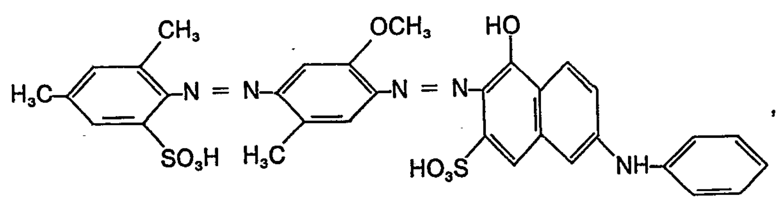

,

dissolved in a solvent mixture which is miscible with water in any proportion and which consists of N,N,N′,N′-tetramethylurea, at least one alkylene glycol ether and water, and alkyl- or alkanolamine in an amount sufficient to bring the pH value of the liquid preparation to 6.5 to 8.5, the dye being in the form of the alkyl- or alkanolamine salt.

2. A liquid preparation according to Claim 1, which consists of 10 to 30, preferably 15 to 20, per cent by weight of the disazo dye, calculated as free acid, dissolved in 20 to 40, preferably 20 to 35, per cent by weight of water, 3 to 20, preferably 5 to 8, per cent by weight of tetramethylurea, 25 to 45, preferably 30 to 40, per cent by weight of an alkylene glycol ether, and alkanolamine or alkylamine in an amount sufficient to bring the pH value of the solution to 6.5 to 8.5, and optionally further additives.

3. A liquid preparation according to Claims 1 ans 2, which contains the disazo dye in the form of the triisopropanolamine salt.

4. A liquid preparation according to Claims 1 to 3, which contains as alkylene glycol ether: ethylene glycol monomethyl ether, ethylene glycol monoethyl ether, diethylene glycol monomethyl ether, diethylene glycol monoethyl ether, diethylene glycol monobutyl ether or triethylene glycol monobutyl ether, or a mixture of these glycol ethers.

5. A liquid preparation according to Claims 1 to 4, which contains diethylene glycol monoethyl ether.

6. A liquid preparation according to Claims 1 to 5, which contains a further additives: electrolyte, bacteriostatics and/or anti-foaming agents.

7. A process for producing the liquid preparation according to Claims 1 to 6, which process comprises adding the disazo dye as free acid in the form of the aqueous press cake, at room temperature, to a solvent mixture as defined, the solvent mixture consisting of at least one alkylene glycol ether and tetramethylurea, optionally in admixture with water, and immediately afterwards adding the alkyl- or alkanolamine in an amount sufficient to bring the pH value of the resulting solution to about 6.5 to 8.5.

8. Use of the liquid preparation according to Claims 1 to 6, or obtained by the process of Claim 7, for dyeing and printing cellulose and polyamide, particularly paper.

## Revendications

1. Préparation liquide d'un colorant disazoïque anionique, stable, concentrée, miscible en toutes proportions avec l'eau, caractérisée par le fait qu'elle contient le colorant disazoïque qui, sous la forme d'acide libre, correspond à la formule

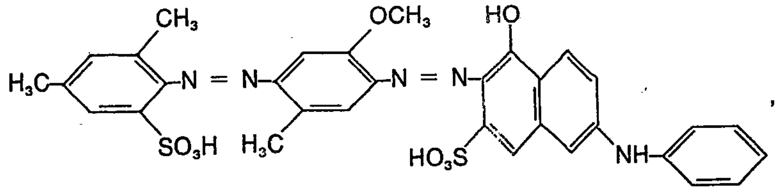

,

dissous dans un mélange de solvants miscible en toutes proportions avec l'eau, constitué par la N,N,N',N'-tétraméthylurée, au moins un alkylèneglycoléther et de l'eau et suffisamment d'alkylamine ou d'alcanolamine pour régler le pH de la préparation liquide à 6,5–8,5, le colorant existant sous la forme de sel d'alkylamine ou de sel d'alcanolamine.

2. Préparation liquide selon la revendication 1, caractérisée par le fait qu'elle est constituée par 10 à 30, de préférence 15 à 20% en poids du colorant disazoïque, calculé en acide libre, dissous dans 20 à 40, de préférence 20 à 35% en poids d'eau, 3 à 20, de préférence 5 à 8% en poids de tétraméthylurée, 25 à 45, de préférence 30 à 40% en poids d'un alkylèneglycoléther et suffisamment d'alcanolamine ou d'alkylamine pour régler le pH de la solution à une valeur de 6,5–8,5, et éventuellement d'autres additifs.

3. Préparation liquide selon les revendications 1 et 2, caractérisée par le fait qu'elle contient le colorant disazoïque sous la forme du sel de triisopropanolamine.

4. Préparation liquide selon les revendications 1 à 3, caractérisée par le fait qu'elle contient comme alkylèneglycoléther, l'éthylèneglycolmonométhyléther, l'éthylèneglycolmonoéthyléther, le diéthylèneglycolmonométhyléther, le diéthylèneglycolmonoéthyléther, le diéthylèneglycolmonobutyléther, le triéthylèneglycolmonobutyléther ou des mélanges de ces éthers de glycols.

5. Préparation liquide selon les revendications 1 à 4, caractérisée par le fait qu'elle contient du diéthylèneglycolmonoéthyléther.

6. Préparation liquide selon les revendications 1 à 5, caractérisée par le fait qu'elle contient comme autres additifs, un électrolyte, un produit bactériostatique et/ou un produit antimousse.

7. Procédé pour la préparation de la préparation liquide selon les revendications 1 à 6, caractérisé par le fait qu'on ajoute colorant disazoïque se trouvant à l'état d'acide libre sous forme d'un gâteau de presse aqueux, à la température ambiante, à un mélange de solvants conforme à la définition constitué par au moins un alkylèneglycoléther et la tétraméthylurée, éventuellement en mélange avec de l'eau, puis qu'on ajoute immédiatement l'alkylamine ou l'alcanolamine en une quantité suffisante pour que le pH de la solution résultante soit d'environ 6,5 à 8,5.

8. Utilisation de la préparation liquide selon les revendications 1 à 6, ou obtenue selon le procédé de la revendication 7, pour colorer et imprimer la cellulose et le polyamide, en particulier le papier.